# EUROPEAN PATENT SPECIFICATION

(11) **EP 1 342 407 B1**
(45) Date of publication and mention of the grant of the patent: **07.12.2005**
(21) Application number: 03076260.3
(22) Date of filing: 22.06.1994
(51) Int. Cl.: A01J 7/00, A01J 5/017

(54) **A construction for automatically milking animals**
Vorrichtung zum automatischen Melken von Tieren
Construction pour la traite automatique d'animaux

(30) Priority: 24.06.1993 NL 9301099
(43) Date of publication of application: 10.09.2003
(62) Divisional of application: 99202283.0
(73) Proprietor: MAASLAND N.V., 3147 PA Maassluis (NL)
(72) Inventor: van der Lely, Cornelis, 6300 Zug (CH)
(74) Representative: Corten, Maurice Jean F.M.

(56) References cited:
- EP-A- 0 091 892
- EP-A- 0 270 165
- EP-A- 0 323 875
- EP-A- 0 440 313
- EP-A- 0 455 305
- GB-A- 2 218 888

## Description

The present invention relates to a construction for automatically milking animals as described in the precharacterizing part of claim 1

Such a construction is known from EP-A-0323875.

It is an object of the invention to provide an alternative construction.

In accordance with the invention, this is achieved by the features of the characterizing part of claim 1. Hereby the detector can function as free from interference as practicable. According to a further feature of the invention, one shielding sheet constitutes the rear wall of the compartment, while two other shielding sheet members, each provided on a part of the side walls of the compartment, abut on this rear wall. According to a feature of the invention, the part of the side walls covered by the shielding sheets is about 1/5 of the overall length of the milking parlour. To limit diffusion of the signal transmitted by the detector, according to still another feature of the invention, the shielding sheets are provided with a layer absorbing the detector rays. Thus, only the radiation from the object to be measured is received by the detector.

The invention will now be further explained with reference to the accompanying drawings, in which:

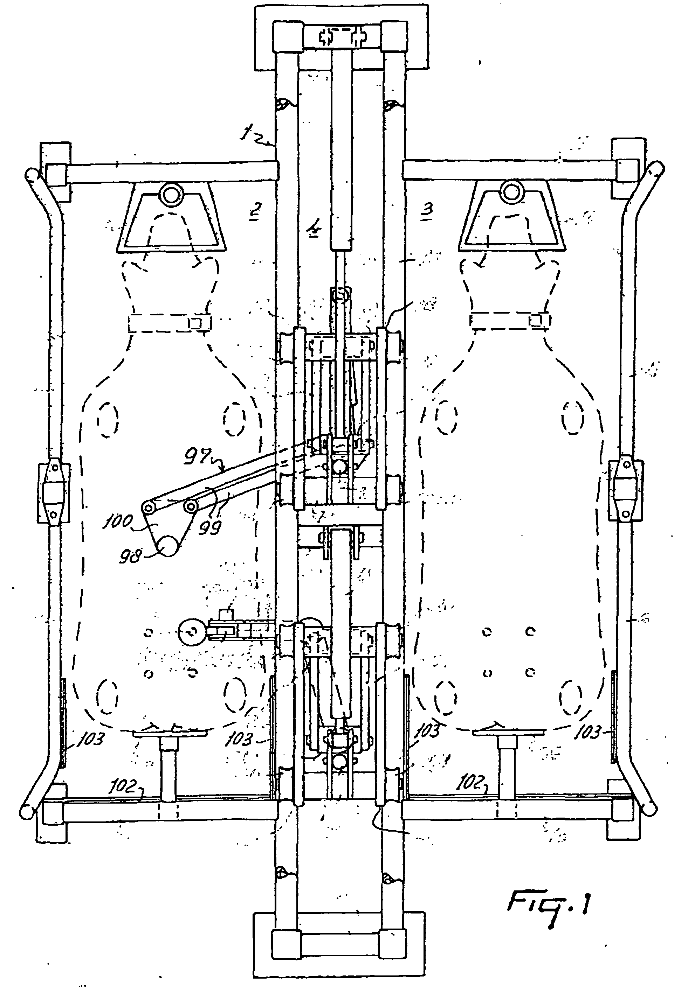

Figure 1 is a plan view of an exemplary embodiment of the invention, showing a milking parlour made up of compartments with, arranged in between the two compartments, a pivotable detector and a pivotable cleaning/massaging device.

Figure 1 represents an exemplary embodiment of a twin milking parlour 1 having two compartments 2 and 3 comprising a sensor 98 which can be swivelled with a square link gear 97. In a condition of rest, a milking robot and a cleaning/massaging are in the interspace 4. The square link gear 97 comprises two arms 99 hinged on one end of a carrying platform 100, on which the sensor 98 is placed. The other ends of the arms 99 are hinged on a beam 101 fitted on a chassis 16. With this chassis it is possible to move the sensor 98 in the longitudinal direction of the twin milking parlour. With an actuating cylinder - not shown - it is also possible to swing the sensor 98 from one compartment to the other. The sensor 98 may be implemented as a laser sensor, an ultrasonic sensor or any other type of sensor.

In operating condition, the co-ordinates of the teats are determined by means of the sensor 98. For this purpose, the sensor is swung underneath the animal to a position before the udder, and the sensor transmits a signal towards the rear side of the compartment. When this signal hits the teats, it is reflected to a receiving element in the sensor 98. From the signal reflected, the positions of the teats can be derived.

Furthermore, the rear walls of the compartments are covered with shielding elements 102 which prevent that elements out of the compartments affect the detection process. The side walls, too, are provided with shielding elements 103 near the rear side of the compartments. Here, the shielding elements 103 abut on the shielding element 102 which is the rear wall. In the exemplary embodiment shown in Figure 1, the shielding elements 103 of the side walls of the compartments screen off about 1/5 of the overall length of a compartment. In addition, the shielding elements 102 as well as the shielding elements 103 are provided with a layer absorbing sensor rays.

## Claims

1. A construction for automatically milking animals, such as cows, provided with a milking parlour (1) having a compartment, a milking robot and a sensor (98), said construction comprises one or more shielding sheets (102. 103) to screen off sensor signals, **characterized in that** the shielding sheets (102, 103) are installed near the rear side of the compartment (2, 3).

2. A construction according to claim 1, **characterized in that** one shielding sheet (102) constitutes the rear wall of the compartment (2, 3), while two other shielding sheet members (103), each provided on a part of the side walls of the compartment (2, 3), abut on this rear wall.

3. A construction according to claim 2, **characterized in that** the shielding sheets (103) on the side walls cover about 1/5 of the overall length of the milking parlour (1).

4. A construction according to any one of the preceding claims, **characterized in that** the shielding sheets (102, 103) are provided with a layer absorbing the sensor signals.

## Patentansprüche

1. Vorrichtung zum automatischen Melken von Tieren, wie z. B. Kühen, die einen Melkstand (1) mit einer Box, einem Melkroboter und einem Sensor (98) aufweist, wobei die Vorrichtung eine oder mehrere Abschirmplatten (102, 103) zum Abschirmen von Sensorsignalen aufweist,
**dadurch gekennzeichnet, daß** die Abschirmplatten (102, 103) nahe der Rückseite der Box (2, 3) angeordnet sind.

2. Vorrichtung nach Anspruch 1,
**dadurch gekennzeichnet, daß** eine Abschirmplatte (102) die Rückwand der Box (2, 3) bildet, während zwei andere Abschirmplatten-Teilstücke (103), die jeweils an einem Teil der Seitenwände der Box (2, 3) angebracht sind, an diese Rückwand angrenzen.

3. Vorrichtung nach Anspruch 2,
**dadurch gekennzeichnet, daß** die Abschirmplatten (103) an den Seitenwänden etwa 1/5 der Gesamtlänge des Melkstandes (1) abdecken.

4. Vorrichtung nach einem der vorhergehenden Ansprüche,
**dadurch gekennzeichnet, daß** die Abschirmplatten (102, 103) mit einer die Sensorsignale absorbierenden Schicht versehen sind.

## Revendications

1. Construction pour la traite automatique d'animaux, tels que des vaches, pourvue d'une salle de traite (1) présentant un compartiment, un robot de traite et un capteur (98), ladite construction comprenant une ou plusieurs tôle(s) de blindage (102, 103) pour isoler les signaux du capteur, **caractérisée en ce que** les tôles de blindage (102, 103) sont installées à proximité du côté arrière du compartiment (2, 3).

2. Construction selon la revendication 1, **caractérisée en ce qu'**une tôle de blindage (102) constitue la paroi arrière du compartiment (2, 3), tandis que deux autres éléments formant tôle de blindage (103), prévus chacun sur une partie des parois latérales du compartiment (2, 3), sont en butée contre cette paroi arrière.

3. Construction selon la revendication 2, **caractérisée en ce que** les tôles de blindage (103) sur les parois latérales recouvrent environ 1/5 de la longueur totale de la salle de traite (1).

4. Construction selon l'une quelconque des revendications précédentes, **caractérisée en ce que** les tôles de blindage (102, 103) sont pourvues d'une couche absorbant les signaux du capteur.
